# EUROPÄISCHE PATENTSCHRIFT

(11) **EP 0 338 290 B1**
(45) Veröffentlichungstag und Bekanntmachung des Hinweises auf die Patenterteilung: **06.03.1996**
(21) Anmeldenummer: 89105446.2
(22) Anmeldetag: 28.03.1989
(51) Int. Cl.: G06F 9/44

(54) **Verfahren zum Laden einer für den Betrieb einer mikroprozessorgesteuerten elektrischen Einrichtung erforderlichen Betriebs-Steuerbefehlsfolge**
Method for loading an operating command sequence necessary for operating a microprocessor-controlled electrical device
Méthode pour charger une séquence de commandes d'opération nécessaire pour mettre en oeuvre un appareil électrique commandé par un microordinateur

(30) Priorität: 20.04.1988 DE 3813271
(43) Veröffentlichungstag der Anmeldung: 25.10.1989
(73) Patentinhaber: SIEMENS AKTIENGESELLSCHAFT, D-80333 München (DE)
(72) Erfinder: Harbrink, Helmut, D-8000 München 71 (DE)

(56) Entgegenhaltungen:
- EP-A- 0 192 070
- EP-A- 0 201 001
- EP-A- 0 220 464
- US-A- 4 428 046
- PATENT ABSTRACTS OF JAPAN, Band 8, Nr. 233 (P-309)[1670], 26. Oktober 1984; & JP-A-59 111 527 (MITSUO KATOU) 27-06-1984

## Beschreibung

Die Erfindung betrifft ein Verfahren zum Laden einer für den Betrieb einer mikroprozessorgesteuerten elektrischen Einrichtung, insbesondere Datenübertragungseinrichtung, erforderlichen Betriebs-Steuerbefehlsfolge in eine der Mikroprozessoranordnung zugehörige Speicheranordnung mit Hilfe einer in einem der Speicheranordnung zugehörigen Festwertspeicher gespeicherten Lade-Steuerbefehlsfolge, wobei die betreffende elektrische Einrichtung wenigstens eine Schnittstellenanordnung mit einer Mehrzahl von Schnittstellenleitungen aufweist, von denen ein Teil während des Betriebs der elektrischen Einrichtung als Signalleitungen für eine Digitalsignalaufnahme und/oder Digitalsignalabgabe benutzt wird.

Es ist bereits ein Verfahren bekannt zum Übertragen von den Betrieb einer Signalbehandlungseinrichtung betreffenden Steuerinformationen von einer Datenvermittlungsanlage her, welche über eine Anzahl von Übertragungskanälen mit der betreffenden Signalbehandlungseinrichtung verbunden ist (Europäische Patentanmeldung Nr. 0192 070). Zwischen der Signalbehandlungseinrichtung und der Datenvermittlungsanlage ist ein gegebenenfalls von den Übertragungskanälen verschiedener Sonderkanal vorgesehen, über den Steuerinformationen von der Datenvermittlungsanlage her jeweils im Zuge einer gesonderten Verbindung übertragen werden. Unter diese Steuerinformationen fallen auch zu den Steuerprogrammen für den Betrieb der Signalbehandlungseinrichtung gehörende Steuerbefehlsfolgen, die bei einer Inbetriebnahme der Signalbehandlungseinrichtung in einen Schreib-/ Lese-Speicher der Signalbehandlungseinrichtung geladen werden. Für dieses Laden ist in einem Festwertspeicher der Signalbehandlungseinrichtung eine Lade-Befehlsfolge gespeichert.

Darüber hinaus ist bereits ein Teletex-Telex-Umsetzer bekannt (Zeitschrift "Philips Telecommunication Review", Band 39, Nr. 2, Juni 1981, Seiten 49 bis 62). Dieser Teletex-Telex-Umsetzer weist u.a. externe Schnittstellen für den Anschluß von Speichermedien auf, in welchen Befehlsfolgen der Steuerprogramme für den Betrieb der Umsetzeinrichtung gespeichert sind. Diese Befehlsfolgen werden bei der Inbetriebnahme der Umsetzeinrichtung mit Hilfe einer in dieser gespeicherten Lade-Befehlsfolge in die Umsetzeinrichtung geladen.

Außerdem ist es im Zusammenhang mit dem Betrieb von Personalcomputern bekannt, externe Speichermedien beispielsweise in Form von Floppy-Disc-Laufwerken an gesonderte Schnittstellenanordnungen anzuschließen, über welche diese Speichermedien auch die erforderlichen Betriebsspannungen zugeführt erhalten. In den Speichermedien gespeicherte Betriebsprogramme können kommandogesteuert in den Arbeitsspeicher des zugehörigen Personalcomputers gelanden werden.

Schließlich ist aus EP-A-O 192 070 A2 ein Verfahren zum Übertragen von den Betrieb einer Signalbehandlungseinrichtung betreffenden Steuerinformationen von einer Datenvermittlungsanlage her bekannt. Diese Datenvermittlungsanlage ist über eine Mehrzahl von Übertragungskanälen mit der betreffenden Signalbehandlungseinrichtung verbunden. Zwischen Signalbehandlungseinrichtung und Datenvermittlungsanlage ist dabei ein ggf. von den Übertragungskanalen verschiedener Sonderkanal vorgesehen, über den Steuerinformationen von der Datenvermittlungsanlage her jeweils im Zuge einer gesonderten Verbindung übertragen werden. Der Aufbau der jeweiligen gesonderten Verbindung erfolgt dabei von einer Bedieneinrichtung der Datenvermittlungsanlage her. Diese Bedieneinrichtung ist an eine Teilnehmerleitung der Datenvermittlungsanlage angeschlossen.

Der für die Übertragung einer Steuerbefehlsfolge erforderliche Verbindungsaufbau erfolgt über die Datenvermittlungsanlage in zwei Schritten. In einem ersten Schritt wird von der Bedieneinrichtung her eine Verbindung zu der Datenvermittlungsanlage hin gemäß der CCITT-Empfehlung X.21 aufgebaut. Durch diese Empfehlung ist eine Signalisierungsprozedur für den Aufbau von Wählverbindungen über Teilnehmeranschlußleitungen eines Wählvermittlungsnetzes festgelegt.

In einem weiteren Schritt wird dann zwischen der Datenvermittlungsanlage und der Signalbehandlungseinrichtung eine Verbindung gemäß CCITT-Empfehlung X.71 hergestellt. Hierbei handelt es sich um eine Signalisierungsprozedur wie sie für den Aufbau von Wählverbindungen über Amtsverbindungsleitungen innerhalb eines Wählvermittlungsnetzes benutzt wird.

Es ist nun Aufgabe der vorliegenden Erfindung, einen Weg zu zeigen, wie bei einem Verfahren der eingangs genannten Art Betriebs-Steuerbefehlsfolgen mit einem geringen Steuerungsaufwand in eine mikroprozessorgesteuerte elektrische Einrichtung gelanden werden können.

Gelöst wird diese Aufgabe bei einem Verfahren der eingangs genannten Art gemäß der vorliegenden Erfindung dadurch, daß an eine der ggf. mehrfach vorhandenen Schnittstellenanordnungen eine mikroprozessorgesteuerte Ladeeinrichtung angeschlossen wird, in deren Mikroprozessoranordnung die zu ladende Betriebs-Steuerbefehlsfolge und eine für deren Übertragung dienende Übertragungs-Steuerbefehlsfolge gespeichert sind, daß die Übertragungs-Steuerbefehlsfolge auf das Zuführen der für den Betrieb der Ladeeinrichtung erforderlichen Betriebsspannung bzw. Betriebsspannungen aktiviert wird, daß auf das Aktivieren der Übertragungs-Steuerbefehlsfolge hin zunächst über eine während des Betriebs der elektrischen Einrichtung nicht als Signalleitung benutzte Schnittstellenleitung zu der elektrischen Einrichtung hin ein Steuersignal übertragen wird, dessen Auftreten in der elektrischen Einrichtung das Aktivieren der Lade-Steuerbefehlsfolge bewirkt, und daß anschließend über wenigstens eine der Signalleitungen die Betriebs-Steuerbefehlsfolge übertragen und in einen der Speicheranordnung der elektrischen Einrichtung zugehörigen ausfallsicheren Speicher gespeichert wird.

Die Erfindung bringt den Vorteil mit sich, daß mit einem geringen Steuerungsaufwand über eine für den normalen Betrieb ohnehin vorhandene Schnittstellenanordnung unter Benutzung lediglich einer freien Schnittstellenleitung eine Betriebs-Steuerbefehlsfolge in die elektrische Einrichtung geladen werden kann, so daß ohne wesentlichen zusätzlichen schaltungstechnischen Aufwand in der elektrischen Einrichtung ausgekommen werden kann. Ein weiterer Vorteil besteht darin, daß die Betriebs-Steuerbefehlsfolge in einen ausfallsicheren Speicher geladen wird. Damit steht diese Betriebs-Steuerbefehlsfolge in der elektrischen Einrichtung beispielsweise auch bei Abschalten der Betriebsspannung bzw. bei einem Ausfall weiterhin zur Verfügung. Sie kann jedoch im Bedarfsfalle, beispielsweise bei einer erforderlichen Änderung, durch Laden einer entsprechend geänderten Betriebs-Steuerbefehlsfolge überschrieben werden.

Zweckmäßigerweise erhält die Ladeeinrichtung die Betriebsspannung bzw. Betriebsspannungen über Schnittstellenleitungen der Schnittstellenanordnung zugeführt. Dies bringt den Vorteil mit sich, daß einerseits für den Betrieb der Ladeeinrichtung keine gesonderte Spannungsversorgung erforderlich ist und andererseits die Übertragungs-Steuerbefehlsfolge bereits mit dem Anschluß der Ladeeinrichtung an die Schnittstellenanordnung aktiviert wird.

Weiterhin ist es zweckmäßig, daß auf das Speichern jedes der Betriebs-Steuerbefehle hin eine Kopie des jeweiligen Betriebs-Steuerbefehls über eine Signalleitung der Schnittstellenanordnung zu der Ladeeinrichtung hin übertragen wird und daß in der Ladeeinrichtung der jeweils empfangene Betriebs-Steuerbefehl mit dem von dieser zuvor abgegebenen Betriebs-Steuerbefehl verglichen wird. Auf diese Weise ist es in einfacher Weise möglich, in der Ladeeinrichtung ein ordnungsgemäßes Speichern der Betriebs-Steuerbefehlsfolge in der elektrischen Einrichtung zu überprüfen.

Schließlich ist es vorteilhaft, daß mit dem Aktivieren der Lade-Steuerbefehlsfolge von der elektrischen Einrichtung her über eine Signalleitung der Schnittstellenanordnung ein die elektrische Einrichtung als aufnahmebereit kennzeichnendes Meldesignal übertragen wird und daß lediglich auf das Eintreffen dieses Meldesignals hin von der Ladeeinrichtung die Betriebs-Steuerbefehlsfolge übertragen wird.

Im folgenden wird nun die Erfindung anhand einer Zeichnung beispielsweise näher erläutert.

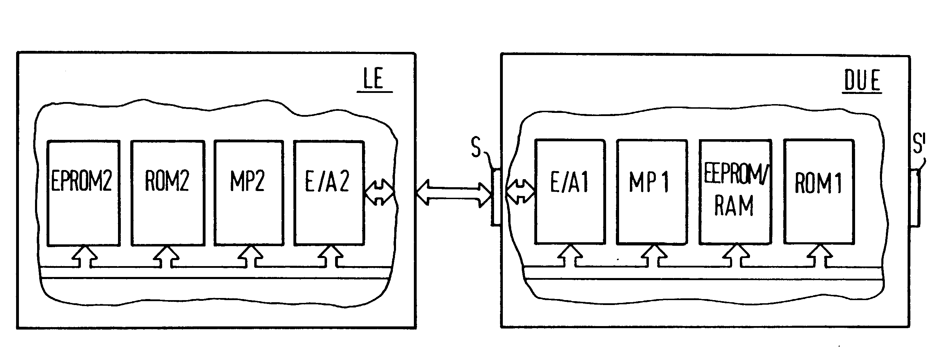

In der Zeichnung ist eine Schaltungsanordnung für die Durchführung des Verfahrens gemäß der vorliegenden Erfindung dargestellt. Diese Schaltungsanordnung weist eine mikroprozessorgesteuerte elektrische Einrichtung DUE auf, bei der es sich beispielsweise um eine Datenübertragungseinrichtung handeln möge, über welche eine Teilnehmer-Datenendeinrichtung an ein Datenvermittlungsnetz anschließbar ist. Von dieser elektrischen Einrichtung ist lediglich ausschnittweise die zugehörige Mikroprozessor-Anordnung angegeben. Danach sind an ein Busleitungssystem eines Mikroprozessors MP1, bei dem es sich beispielsweise um einen Ein-Chip-Mikroprozessor handeln möge, ein Festwertspeicher ROM1 und ein elektrisch löschbarer Festwertspeicher EEPROM oder alternativ ein batteriegepufferter Schreib-/Lese-Speicher RAM angeschlossen. In dem Festwertspeicher ist dabei eine Lade-Steuerbefehlsfolge gespeichert, mit deren Hilfe eine für den Betrieb der elektrischen Einrichtung erforderliche Betriebs-Steuerbefehlsfolge in den Speicher EEPROM bzw. RAM ladbar ist.

Mit dem genannten Busleitungssystem ist weiterhin wenigstens eine Ein-/Ausgabe-Anordnung E/A1 verbunden, über welche die Mikroprozessor-Anordnung über eine Mehrzahl von Schnittstellenleitungen an einen Schnittstellen-Steckverbinder S angeschlossen ist. Ein Teil der Schnittstellenleitungen ist während des Betriebs der elektrischen Einrichtung als Signalleitungen benutzt, über welche die elektrische Einrichtung DUE Signale in digitaler Form aufnimmt bzw. abgibt. Bei einer zuvor beispielsweise genannten Datenübertragungseinrichtung werden über diese Signalleitungen Datensignale mit der zugehörigen Teilnehmer-Datenendeinrichtung oder Einrichtungen des Nachrichtenvermittlungsnetzes ausgetauscht.

An den Schnittstellen-Steckverbinder S ist für das Laden der zuvor genannten Betriebs-Steuerbefehlsfolge eine mikroprozessorgesteuerte Ladeeinrichtung LE angeschlossen. Von dieser Ladeeinrichtung ist ausschnittweise die zugehörige Mikroprozessor-Anordnung dargestellt. Diese weist einen Mikroprozessor MP2 beispielsweise wieder in Form eines Ein-Chip-Mikroprozessors auf, an dessen Busleitungssystem eine einen Festwertspeicher ROM2 und einen elektrisch löschbaren Festwertspeicher EPROM2 aufweisende Speicheranordnung angeschlossen ist. In dem Festwertspeicher ROM2 ist eine Übertragungs-Steuerbefehlsfolge gespeichert, mit deren Hilfe eine in dem elektrisch löschbaren Festwertspeicher EPROM2 gespeicherte Betriebs-Steuerbefehlsfolge zu der elektrischen Einrichtung DUE hin übertragbar ist. Für diese Übertragung ist mit dem Busleitungssystem des Mikroprozessors MP2 eine Ein-/Ausgabe-Anordnung E/A2 verbunden.

Die Ladeeinrichtung LE erhält die für ihren Betrieb erforderliche Betriebsspannung bzw. erforderlichen Betriebsspannungen über während des Betriebs der elektrischen Einrichtung DUE nicht als Signalleitungen benutzte Schnittstellenleitungen zugeführt, so daß keine gesonderte Spannungsversorgung erforderlich ist.

Bezüglich des zuvor genannten elektrisch löschbaren Festwertspeichers EPROM2 sei noch darauf hingewiesen, daß dieser auswechselbar auf einem Stecksockel aufgesteckt ist. Damit ist es beispielsweise möglich, durch Austausch dieses elektrisch löschbaren Festwertspeichers der elektrischen Einhrichtung DUE an unterschiedliche Einsatzfälle angepaßte Betriebs-Steuerbefehlsfolgen zuzuführen.

Die in dem Festwertspeicher ROM2 der Ladeeinrichtung LE gespeicherte Übertragungs-Steuerbefehlsfolge wird mit der Zuführung der Betriebsspannung bzw. Betriebsspannungen aktiviert, d. h. also mit dem Anstecken der Ladeeinrichtung an den Schnittstellen-Steckverbinder S. Auf dieses Aktivieren hin wird zunächst über eine während des Betriebs der elektrischen Einrichtung DUE nicht als Signalleitung benutzte Schnittstellenleitung ein Steuersignal übertragen. Die betreffende Schnittstellenleitung wird durch den Mikroprozessor MP1 der elektrischen Einrichtung in periodischen Abständen hinsichtlich des Auftretens eines Steuersignals abgefragt. Alternativ kann jedoch die betreffende Schnittstellenleitung auch mit einem Unterbrechungssignal-Eingang dieses Mikroprozessors verbunden sein. Unabhängig von der Art und Weise, wie von dem Mikroprozessor her das Auftreten eines Steuerbefehls erkannt wird, wird auf ein solches Autreten hin die in dem zugehörigen Festwertspeicher ROM1 gespeicherte Lade-Steuerbefehlsfolge aktiviert. Im Anschluß daran beginnt die Ladeeinrichtung LE im Zuge des Ablaufs der Übertragungs-Steuerbefehlsfolge mit der sequentiellen Übertragung der gespeicherten Betriebs-Steuerbefehlsfolge. Die Übertragung erfolgt dabei über wenigstens eine festgelegte, mit dem Schnittstellen-Steckverbinder S verbundene Signalleitung. Der Mikroprozessor MP1 der elektrischen Einrichtung DUE übernimmt diese Betriebs-Steuerbefehlsfolge über die zugehörige Ein-/Ausgabe-Anordnung E/A1 und überträgt anschließend die einzelnen Betriebs Steuerbefehle im Zuge des Ablaufs der Lade-Steuerbefehlsfolge in festgelegte Speicherzellen des elektrisch löschbaren Festwertspeichers EEPROM bzw. batteriegepufferten Schreib-/Lese-Speichers RAM.

Abweichend von dem zuvor beschriebenen Ladeverfahren kann auch auf das Erkennen eines Steuersignals durch den Mikroprozessor der elektrischen Einrichtung hin von diesem mit der Aktivierung der Lade-Steuerbefehlsfolge ein Meldesignal über beispielsweise eine Signalleitung zu der Ladeeinrichtung LE hin übertragen werden. Durch das Auftreten dieses Meldesignals wird der Ladeeinrichtung die Aufnahmebereitschaft der Ladeeinrichtung angezeigt. Erst bei Vorliegen einer derartigen Aufnahmebereitschaft erfolgt eine Übertragung der Betriebs-Steuerbefehlsfolge in der zuvor angegebenen Weise.

Darüber hinaus ist es auch möglich, daß mit dem sequentiellen Speichern der einzelnen Betriebs-Steuerbefehle in den Festwertspeicher EEPROM bzw. Schreib-/Lesespeicher RAM eine Kopie des jeweiligen Betriebs-Steuerbefehls über eine Signalleitung zu der Ladeeinrichtung LE hin übertragen wird. In der Ladeeinrichtung erfolgt dann ein Vergleich des jeweils empfangenen Betriebs-Steuerbefehl mit dem zuvor übertragenen, beispielsweise in einem Register des Mikroprozessors MP2 noch zur Verfügung stehenden Betriebs-Steuerbefehls. Auf diese Weise steht in der Ladeeinrichtung für jeden der übertragenen Betriebs-Steuerbefehle eine Information bezüglich der fehlerfreien Übertragung und Speicherung in der elektrischen Einrichtung DUE zur Verfügung.

Schließlich kann das Ladeverfahren auch derart modfifiziert sein, daß bereits mit dem Anstecken der Ladeeinrichtung LE an den Schnittstellen-Steckverbinder S der elektrischen Einrichtung DUE ein Steuersignal in Form eines festgelegten logischen Pegels zugeführt wird, welches die genannte Lade-Steuerbefehlsfolge aktiviert. Mit dieser Aktivierung wird dann unter der Steuerung des Mikroprozessors MP1 über festgelegte Schnittstellenleitungen, die beispielsweise auch Signalleitungen sein können, ein definierter logischer Pegel bereitgestellt. Dieser logische Pegel dient der Ladeeinrichtung als Betriebsspannung, so daß mit dem Bereitstellen dieses logischen Pegels die in der Ladeeinrichtung gespeicherte Übertragungs-Steuerbefehlsfolge aktiviert wird. Dabei beginnt die Übertragung der Betriebs-Steuerbefehlsfolge ggfs. erst mit dem Auftreten des bereits genannten Meldesignals. Da bei diesem modifizierten Ladeverfahren die Lade-Steuerbefehlsfolge bereits mit dem Anstecken der Ladeeinrichtung an den Schnittstellen-Steckverbinder aktiviert ist, ist die Abgabe eines gesonderten Steuersignals seitens der Ladeeinrichtung nicht erforderlich.

Abschließend sei nich darauf hingewiesen, daß für die Mikroprozessoren MP1 und MP2 jeweils ein Mikroprozessor aus der von der Siemens AG angebotenen 8051-Familie benutzt sein kann. Für das beschriebene Ladeverfahren kann dabei die serielle Schnittstelle in einem vorgesehenen asynchronen Start-Stop-Modus benutzt sein.

## Patentansprüche

1. Verfahren zum Laden einer für den Betrieb einer mikroprozessorgesteuerten elektrischen Einrichtung (DUE), insbesondere Datenübertragungseinrichtung, erforderlichen Betriebs-Steuerbefehlsfolge in eine der Mikroprozessoranordnung zugehörige Speicheranordnung (EEPROM bzw. RAM) mit Hilfe einer in einem der Speicheranordnung zugehörigen Festwertspeicher (ROM1) gespeicherten Lade-Steuerbefehlsfolge, wobei die betreffende elektrische Einrichtung wenigstens eine Schnittstellenanordnung (S, E/A) mit einer Mehrzahl von Schnittstellenleitungen aufweist, von denen ein Teil während des Betriebs der elektrischen Einrichtung als Signalleitungen für eine Digitalsignalaufnahme und/oder Digitalsignalabgabe benutzt wird, **dadurch gekennzeichnet,**
daß an eine der gegebenenfalls mehrfach vorhandenen Schnittstellenanordnungen (S, E/A) eine mikroprozessorgesteuerte Ladeeinrichtung (LE) angeschlossen wird, in deren Mikroprozessoranordnung die zu ladende Betriebs-Steuerbefehlsfolge und eine für deren Übertragung dienende Übertragungs-Steuerbefehlsfolge gespeichert sind, daß die Übertragungs-Steuerbefehlsfolge auf das Zuführen der für den Betrieb der Ladeeinrichtung erforderlichen Betriebsspannung bzw. Betriebsspannungen aktiviert wird,
daß auf das Aktivieren der Übertragungs-Steuerbefehlsfolge hin zunächst über eine während des Betriebs der elektrischen Einrichtung nicht als Signalleitung benutzte Schnittstellenleitung zu der elektrischen Einrichtung hin ein Steuersignal übertragen wird, dessen Auftreten in der elektrischen Einrichtung das Aktivieren der Lade-Steuerbefehlsfolge bewirkt,
und daß anschließend über wenigstens eine der Signalleitungen die Betriebs-Steuerbefehlsfolge übertragen und in einem der Speicheranordnung der elektrischen Einrichtung zugehörigen ausfallsicheren Speicher (EEPROM bzw. RAM) gespeichert wird.

2. Verfahren nach Anspruch 1, **dadurch gekennzeichnet,**
daß der Ladeeinrichtung (LE) die Betriebsspannung bzw. Betriebsspannungen über Schnittstellenleitungen der Schnittstellenanordnung (S, E/A) zugeführt werden.

3. Verfahren nach Anspruch 1 oder 2, **dadurch gekennzeichnet**,
daß auf das Speichern jedes der Betriebs-Steuerbefehle hin eine Kopie des jeweiligen Betriebs-Steuerbefehls über eine Signalleitung der Schnittstellenanordnung zu der Ladeeinrichtung (LE) hin übertragen wird
und daß in der Ladeeinrichtung der jeweils empfangene Betriebs-Steuerbefehl mit dem von dieser zuvor abgegebenen Betriebs-Steuerbefehl verglichen wird.

4. Verfahren nach einem der Ansprüche 1 bis 3, **dadurch gekennzeichnet**,
daß mit dem Aktivieren der Lade-Steuerbefehlsfolge von der elektrischen Einrichtung her über eine Signalleitung der Schnittstellenanordnung (S, E/A) ein die elektrische Einrichtung als aufnahmebereit kennzeichnendes Meldesignal übertragen wird und daß auf das Eintreffen dieses Meldesignals hin von der Ladeeinrichtung die Betriebs-Steuerbefehlsfolge übertragen wird.

## Claims

1. Method for loading an operating control command sequence necessary for operating a microprocessor-controlled electrical device (DUE), in particular a data transmission device, into a memory arrangement (EEPROM or RAM) associated with the microprocessor arrangement with the aid of a loading control command sequence stored in a read-only memory (ROM1) associated with the memory arrangement, the electrical device concerned having at least one interface arrangement (S, E/A) with a plurality of interface lines, some of which are used during the operation of the electrical device as signal lines for a digital signal pick-up and/or digital signal emission, characterized in that a microprocessor-controlled loading device (LE), in the microprocessor arrangement of which the operating control command sequence to be loaded and a transmission control command sequence serving for the transmission of the latter sequence are stored, is connected to one of the possibly several interface arrangements (S, E/A), in that the transmission control command sequence is activated in response to the supplying of the operating voltage or operating voltages necessary for operating the loading device, in that, in response to the activation of the transmission control command sequence, initially a control signal is transmitted to the electrical device via an interface line which is not been used as a signal line during the operation of the electrical device, the occurrence of which signal in the electrical device effects the activation of the loading control command sequence, and in that subsequently the operating control command sequence is transmitted via at least one of the signal lines and is stored in a fail-safe memory (EEPROM or RAM) associated with the memory arrangement of the electrical device.

2. Method according to Claim 1, characterized in that the loading device (LE) is supplied with the operating voltage or operating voltages via interface lines of the interface arrangement (S, E/A).

3. Method according to Claim 1 or 2, characterized in that, in response to the storing of each of the operating control commands, a copy of the respective operating control command is transmitted via a signal line of the interface arrangement to the loading device (LE) and in that, in the loading device, the respectively received operating control command is compared with the operating control command previously issued by the latter device.

4. Method according to one of Claims 1 to 3, characterized in that, with the activation of the loading control command sequence, an indicating signal identifying the electrical device as ready to receive is transmitted from the electrical device via a signal line of the interface arrangement (S, E/A) and in that, in response to the arrival of this indicating signal, the operating control command sequence is transmitted by the loading device.

## Revendications

1. Procédé de chargement d'une suite d'instructions de commande de fonctionnement, qui est nécessaire au fonctionnement d'un dispositif électrique (DUE) commandé par microprocesseur, notamment d'un dispositif de transmission de données, dans un dispositif de mémoire (EEPROM ou RAM) associé au dispositif à microprocesseur, à l'aide d'une suite d'instructions de commande de chargement mémorisée dans une mémoire morte (ROM1) associée au dispositif de mémoire, le dispositif électrique considéré comportant au moins un dispositif d'interface (S, E/A) comportant une multiplicité de lignes d'interface, dont on utilise une partie pendant le fonctionnement du dispositif électrique sous la forme de lignes de transmission de signaux pour une réception et/ou une fourniture de signaux numériques, caractérisé par le fait
qu'à l'un des dispositifs d'interface (S, E/A), éventuellement présents de façon multiple, on raccorde un dispositif de chargement (LE), qui est commandé par microprocesseur et dans le dispositif à microprocesseur duquel sont mémorisées la suite d'instructions de commande de fonctionnement devant être chargée et une suite d'instructions de commande de transmission destinée à la transmission de cette suite d'instructions de commande de fonctionnement,
on active la suite d'instructions de commande de transmission pour appliquer la ou des tensions de fonctionnement nécessaires au fonctionnement du dispositif de chargement,
à la suite de l'activation de la suite d'instructions de commande de transmission, on transmet tout d'abord, par l'intermédiaire d'une ligne d'interface non utilisée comme ligne de transmission de signaux pendant le fonctionnement du dispositif électrique, en direction du dispositif électrique, un signal de commande dont l'apparition dans le dispositif électrique déclenche l'activation de la suite d'instructions de commande de chargement, et
ensuite, on transmet la suite d'instructions de commande de fonctionnement par l'intermédiaire d'au moins l'une des lignes de transmission de signaux et on la mémorise dans une mémoire (EEPROM ou RAM) protégée en cas de défaillance et appartenant au dispositif de mémoire du dispositif électrique.

2. Procédé suivant la revendication 1, caractérisé par le fait que l'on applique la ou les tensions de fonctionnement envoyées au dispositif de chargement (2) par l'intermédiaire de lignes d'interface du dispositif d'interface (S, E/A).

3. Procédé suivant la revendication 1 ou 2, caractérisé par le fait
qu'à la suite de la mémorisation de chacune des instructions de commande de fonctionnement, on en transmet une copie au dispositif de chargement (LE) par l'intermédiaire d'une ligne de transmission de signaux du dispositif d'interface, et
on compare dans le dispositif de chargement, l'instruction de commande de fonctionnement reçue à l'instruction de commande de fonctionnement fournie auparavant.

4. Procédé suivant l'une des revendications 1 à 3, caractérisé par le fait
que l'on transmet, lors de l'activation de la suite d'instructions de commande de chargement à partir du dispositif électrique, un signal de signalisation, qui caractérise le dispositif électrique comme étant prêt à la réception, par l'intermédiaire d'une ligne de transmission de signaux au dispositif d'interface (S, E/A) et on transmet à la suite de l'apparition de ce signal de signalisation, la suite d'instructions de commande de fonctionnement par le dispositif de chargement.
